# EUROPEAN PATENT APPLICATION

(11) **EP 4 678 954 A1**
(43) Date of publication of application: **14.01.2026**
(21) Application number: 23927610.8
(22) Date of filing: 05.12.2023
(51) Int. Cl.: F16J 15/3208, F16J 15/18, F16J 15/24, F16J 15/3236

(54) **SEALING STRUCTURE**

(30) Priority: 10.03.2023 JP 2023037317
(71) Applicant: NOK Corporation, Minato-ku Tokyo 105-8585 (JP)
(72) Inventor: IKEDA Atsushi, Kitaibaraki-shi, Ibaraki 319-1535 (JP); TAKAMATSU Shunpei, Fujisawa-shi, Kanagawa 251-0042 (JP); YOSHIDA Yusuke, Kitaibaraki-shi, Ibaraki 319-1535 (JP)
(74) Representative: TBK
(86) International application number: PCT/JP2023/043541
(87) International publication number: WO 2024/190005

(57) **Abstract**

A sealing structure is provided that can obtain desired sealing performance for a fluid with a simple structure even in a low temperature environment. A sealing structure (1) is a sealing structure for sealing of an annular gap. The sealing structure (1) includes one sealing device (2). One sealing device (2) exhibits desired sealing performance for a fluid even in a low temperature environment. One sealing device (2) has one seal ring (3) which is annular around an axis line (x) and one action member (4) as a member which is annular around the axis line x. The action member (4) is a member which acts on the seal ring (3) and acts such that the seal ring (3) exhibits the desired sealing performance in the low temperature environment.

## Description

### Technical Field

The present disclosure relates to a sealing structure.

### Background Art

In related art, in order to seal a gap between a member performing reciprocating motion and a tubular hole into which this member is inserted, a sealing device having a seal ring has been used. A seal ring is attached to a piston of a pump, for example, to cause the piston to pressure-feed a fluid while preventing or inhibiting leakage of the fluid (for example, see Patent Literature 1).

### Citation List

### Patent Literature

Patent Literature 1: Japanese Patent Laid-Open No. 2016-014481

### Summary of Invention

### Technical Problem

In related art, for a sealing device, a structure has been demanded which performs sealing for a fluid pressure-fed by a pump without leakage even in a low temperature environment. For example, a sealing device has been known in which a sealing structure is formed by aligning a plurality of seal rings in series, a multistage closing structure is provided, and sealing for a fluid is thereby intended in a low temperature environment. On the other hand, for such a sealing device, a simpler structure has been demanded.

The present invention has been made in consideration of the above problems, and an object thereof is to provide a sealing structure that can obtain desired sealing performance for a fluid with a simple structure even in a low temperature environment.

### Solution to Problem

To achieve the above object, a sealing structure according to the present invention is a sealing structure for sealing an annular gap, the sealing structure including one sealing device, in which the one sealing device exhibits desired sealing performance for a fluid even in a low temperature environment, the one sealing device has one seal ring which is annular around an axis line and one action member as a member which is annular around the axis line, and the action member is a member which acts on the seal ring and acts such that the seal ring exhibits the desired sealing performance in the low temperature environment.

In the sealing structure according to one aspect of the present invention, the seal ring has a seal surface which forms contact for sealing the gap and faces an outer periphery side, and the action member acts so as to maintain contact of the seal surface in the low temperature environment.

In the sealing structure according to one aspect of the present invention, the action member acts on the seal ring, which contracts in the low temperature environment, so as to maintain contact of the seal surface.

In the sealing structure according to one aspect of the present invention, the action member supports the seal ring so as to maintain contact of the seal surface.

The sealing structure according to one aspect of the present invention includes an action surface that acts on the seal ring, the action surface pushes the seal ring, which is pushed by the action member, in a direction in which contact of the seal surface is formed, and the action member pushes the seal ring to one side in the axis line direction so as to maintain contact of the seal surface.

The sealing structure according to one aspect of the present invention includes a groove that is annular around the axis line and houses the sealing device, the groove is open to the outer periphery side and has the action surface, and the action surface is a surface which is annular around the axis line.

In the sealing structure according to one aspect of the present invention, the action surface of the groove is a surface whose diameter is enlarged toward one side in the axis line direction and which faces the outer periphery side.

In the sealing structure according to one aspect of the present invention, the seal ring has an action receiving surface as an annular surface which contacts the action surface of the groove.

In the sealing structure according to one aspect of the present invention, the action member is an elastic member which produces elastic force in a direction along the axis line.

In the sealing structure according to one aspect of the present invention, the action member is compressed in a direction along the axis line between the groove and the seal ring.

In the sealing structure according to one aspect of the present invention, the seal ring has a base portion, which is annular around the axis line, and an inner periphery lip and an outer periphery lip, which are annular and branch from the base portion toward one side in the axis line direction, the outer periphery lip is provided on the outer periphery side relative to the inner periphery lip, the inner periphery lip and the outer periphery lip form a space portion which is annular and is recessed toward another side in the axis line direction, the outer periphery lip has the seal surface on the outer periphery side, and the action member is housed in the space portion and contacts, from an inner periphery side, the outer periphery lip which forms the seal surface.

In the sealing structure according to one aspect of the present invention, in the space portion, a gap is formed between the action member and the inner periphery lip.

In the sealing structure according to one aspect of the present invention, in the seal ring, the seal surface and the action receiving surface face away with each other, on another side in the axis line direction relative to the seal surface and the action receiving surface, the seal ring has another action receiving surface as an annular surface which faces the other side in the axis line direction, and the action member contacts the other action receiving surface.

In the sealing structure according to one aspect of the present invention, a cross-sectional shape of the action member, which is orthogonal to an extending direction around the axis line, is an annular shape or an arc shape.

In the sealing structure according to one aspect of the present invention, a linear expansion coefficient of the action member is smaller than a linear expansion coefficient of the seal ring.

In the sealing structure according to one aspect of the present invention, the action member is formed of metal.

In the sealing structure according to one aspect of the present invention, the seal ring is formed of a resin.

### Advantageous Effects of Invention

A sealing structure according to the present invention can obtain desired sealing performance for a fluid with a simple structure even in a low temperature environment.

### Brief Description of Drawings

[Figure 1] Figure 1 is a cross-sectional view illustrating an outline configuration of a sealing structure according to a first embodiment of the present invention in a usage state in an application to a pump.
[Figure 2] Figure 2 is a perspective view of the sealing structure illustrated in Figure 1.
[Figure 3] Figure 3 is a cross-sectional perspective view illustrating a part of the sealing structure illustrated in Figure 2.
[Figure 4] Figure 4 is a cross-sectional view of a support ring as an action member in the sealing structure illustrated in Figure 2.
[Figure 5] Figure 5 is a perspective view illustrating a U seal (U packing) of a reference example.
[Figure 6] Figure 6(A) is a vertical cross-sectional view illustrating the U seal (U packing) of the reference example, and Figure 6(B) is a vertical cross-sectional view illustrating an extremely-low-temperature-adaptable seal of the embodiment.
[Figure 7] Figure 7 illustrates vertical cross-sectional views about the U seal (U packing) of the reference example, in which Figure 7(A) illustrates a state in a case where a fluid for which sealing is performed is at an ordinary temperature and Figure 7(B) illustrates a state in a case where the fluid for which sealing is performed is at an extremely low temperature.
[Figure 8] Figure 8 is a cross-sectional view illustrating a modification example of the sealing structure.
[Figure 9] Figure 9 is a cross-sectional view illustrating the modification example of the sealing structure.
[Figure 10] Figure 10 is a cross-sectional view illustrating an outline configuration of a sealing structure according to a second embodiment of the present invention, the sealing structure being applied to a pump.
[Figure 11] Figure 11 is a partially enlarged cross-sectional view illustrating the sealing structure illustrated in Figure 10.
[Figure 12] Figure 12 is an exploded perspective view of a sealing device of the sealing structure illustrated in Figure 10.
[Figure 13] Figure 13 is a cross-sectional perspective view illustrating a part of a seal ring in the sealing device illustrated in Figure 12.
[Figure 14] Figure 14 is a cross-sectional perspective view illustrating a part of a pressing ring in the sealing device illustrated in Figure 12.
[Figure 15] Figure 15 is a cross-sectional view illustrating a cross section of the sealing structure in a state where the pump is assembled.
[Figure 16] Figure 16 is a view for comparing the seal ring in a usage state where an ambient temperature is an atmospheric temperature with the seal ring in the usage state in a low temperature environment.

### Description of Embodiments

Embodiments of the present invention will hereinafter be described with reference to drawings.

A sealing structure according to an embodiment of the present invention is a sealing structure for sealing an annular gap and is applied to a pump which pressure-feeds a liquid. The pump to which the sealing structure according to the embodiment of the present invention is applied is a pump which pressure-feeds low temperature liquefied gas such as low temperature liquid fuel for general industrial use, for example. For example, the low temperature liquid fuel may be liquid hydrogen fuel. Specifically, the sealing structure according to the embodiment of the present invention is used for sealing an annular gap between a piston as a member performing reciprocating motion and a cylinder having a tubular hole into which the piston is inserted. Note that application targets of the sealing structure according to the present invention are not limited to pumps which pressure-feed liquids. The sealing structure according to the present invention is applied to other pumps, other devices, mechanisms, and structures, and so forth.

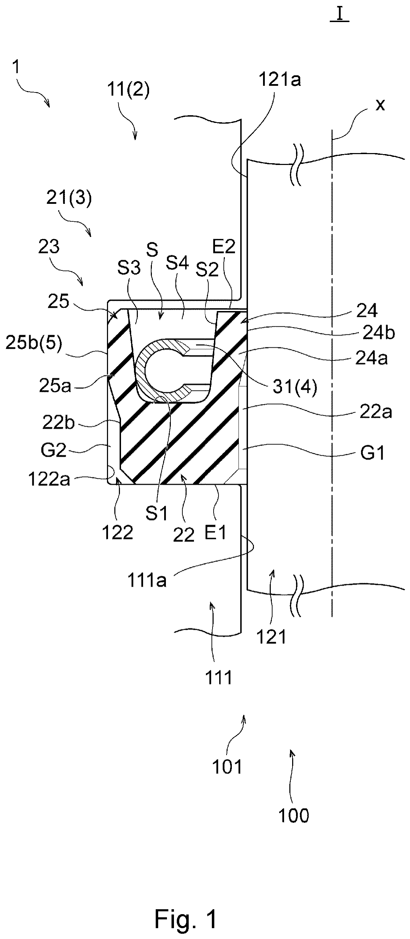

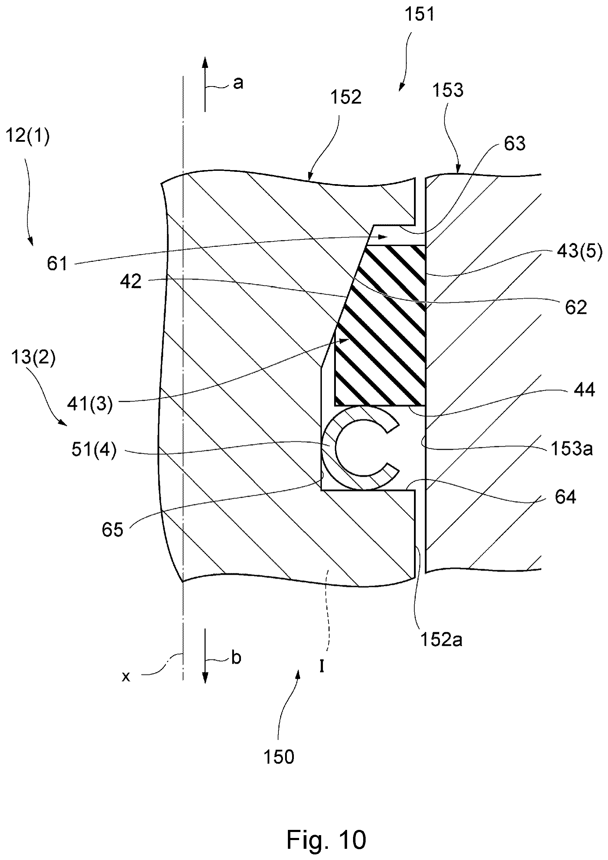

As illustrated in Figures 1 and 10, the sealing structure 1 according to the embodiment of the present invention includes one sealing device 2. One sealing device 2 exhibits desired sealing performance for a fluid even in a low temperature environment. One sealing device 2 has one seal ring 3 which is annular around an axis line x and one action member 4 as a member which is annular around the axis line x. The action member 4 is a member which acts on the seal ring 3 and acts such that the seal ring 3 exhibits desired sealing performance in a low temperature environment. Hereinafter, a configuration of the sealing structure 1 will specifically be described. Note that the axis line x is an axis line of the sealing structure 1.

As illustrated in Figures 1 and 10, the seal ring 3 has a seal surface 5 which forms contact for sealing a gap and faces an outer periphery side. In other words, the seal surface 5 is a surface of the seal ring 3 which contacts a member of an application target for sealing the gap in a usage state of the sealing structure 1, which will be described later. The action member 4 acts so as to maintain contact of the seal surface 5 in the low temperature environment. Specifically, the action member 4 acts on the seal ring 3, which contracts in the low temperature environment, so as to maintain contact of the seal surface 5. The action member 4 supports the seal ring 3 so as to maintain contact of the seal surface 5, for example. Further, the action member 4 pushes the seal ring 3 to one side in an axis line x direction (an arrow a direction in Figure 10) so as to maintain contact of the seal surface 5, for example.

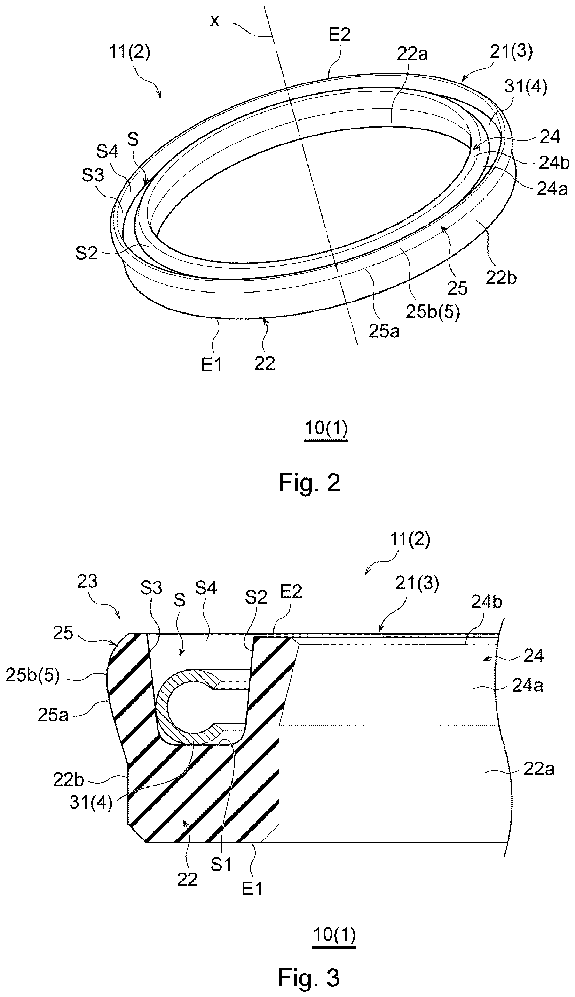

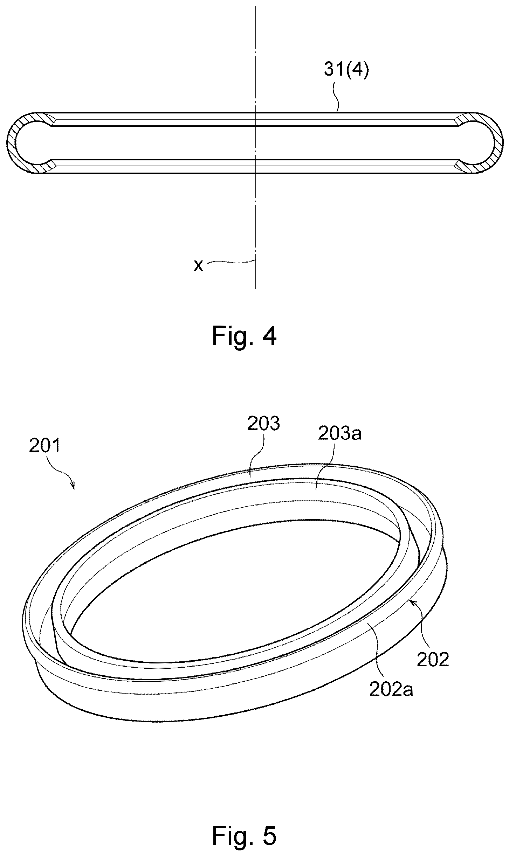

Next, a sealing structure 10 as the sealing structure 1 according to a first embodiment of the present invention will be described. Figure 1 is a cross-sectional view illustrating an outline configuration of the sealing structure 10 according to the first embodiment of the present invention in a usage state in an application to the pump 100. Figure 2 is a perspective view of the sealing structure 10 illustrated in Figure 1, Figure 3 is a cross-sectional perspective view illustrating a part of the sealing structure 10 illustrated in Figure 2, and Figure 4 is a cross-sectional view of a support ring 31 as the action member 4 in the sealing structure 10 illustrated in Figure 2. Note that Figures 1, 3, and 4 illustrate cross sections in a plane including the axis line x.

As illustrated in Figures 1 to 4, the sealing structure 10 according to the first embodiment includes a sealing device 11 as one sealing device 2, and the sealing device 11 includes a U packing 21 as the seal ring 3 and the support ring 31 as the action member 4. The support ring 31 supports the U packing 21 so as to maintain contact of the seal surface 5. Hereinafter, a configuration of the sealing structure 10 will specifically be described.

As illustrated in Figure 1, the sealing structure 10 of the present embodiment is attached to the pump 100 and thereby becomes the usage state. The sealing structure 10 is arranged between two members 101 which are arranged on inner and outer peripheries and seals a gap between the two members 101 both of which are formed of metal, for example. The pump 100 is a booster pump, for example, and the two members 101 are a cylinder 111 and a piston 121 of the pump, for example.

The cylinder 111 is an annular member, which retains the piston 121 such that the piston 121 is capable of reciprocating, and forms an outer periphery member of the two members 101. An inner peripheral surface 111a of the cylinder 111 is a tubular surface and demarcates an internal space I into which the piston 121 is inserted. In the inner peripheral surface 111a of the cylinder 111, a mounting groove 122 is provided which is annular and is for housing the sealing structure 10.

The piston 121 is housed in the internal space I of the cylinder 111 to be capable of reciprocating and is driven by a driving mechanism, which is not illustrated, to reciprocate in the internal space I of the cylinder 111.

The booster pump boosts pressure of a liquid and pressure-feeds the liquid to an outside. The liquid to be pressure-fed by the pump 100 is a liquid at a low temperature such as low temperature liquefied gas, for example. In a case where the liquid to be pressure-fed by the pump 100 is a liquid at a low temperature, the sealing structure 10 is placed in a low temperature environment. The low temperature environment is an environment in which an ambient temperature is lower than an atmospheric temperature, for example. Specifically, for example, the low temperature environment is an environment in which the ambient temperature is -253°C or an environment in which the ambient temperature is lower than -253°C.

In a case where the sealing structure 10 is placed in the low temperature environment, for example, in a case where the internal space I of the cylinder 111 is placed in a low temperature environment at -253°C or lower, the sealing structure 10 which is housed in the mounting groove 122 and seals a gap between the piston 121 and the cylinder 111 has to have performance capable of performing sealing for the liquid in the low temperature environment. As illustrated in Figures 1 to 3, the sealing structure 10 of the present embodiment for which such performance is demanded has a structure in which the U packing 21 and the support ring 31 are combined.

As illustrated in Figure 1 through Figure 3, the whole U packing 21 presents a shape which is annular around the axis line x with a size to fit in the mounting groove 122 of the cylinder 111. As illustrated in Figures 1 and 3, the U packing 21 has a U shape. In the U packing 21, a base portion 22 is provided on a side of an end portion E1 on one side in the axis line x direction, and a lip portion 23 is provided on a side of an end portion E2 on an opposite side to the base portion 22. As illustrated in Figures 1 and 3, the base portion 22 is a portion which is annular around the axis line x. Further, the U packing 21 has an inner periphery lip 24 and an outer periphery lip 25, which are annular and branch from the base portion 22 toward the side of the end portion E2 in the axis line x direction. The outer periphery lip 25 is provided on the outer periphery side relative to the inner periphery lip 24.

As illustrated in Figures 1 and 3, in a region on a root side which does not branch into the U shape, a cross section of the base portion 22, which is sectioned in a plane including the axis line x, has a rectangular shape. More specifically, a cross-sectional shape of the base portion 22 is a rectangular shape whose both shoulders are chamfered in the end portion E1.

The lip portion 23 has a shape which branches from both ends of inner and outer peripheries of the base portion 22 and extends toward the end portion E2. As described above, in a region which branches and extends from the base portion 22, the inner periphery lip 24 is positioned on an inner periphery side, and the outer periphery lip 25 is positioned on the outer periphery side. As a result of branching of the lip portion 23 into the inner periphery lip 24 and the outer periphery lip 25 in such a manner, the inner periphery lip 24 and the outer periphery lip 25 form a space portion S which is annular and is recessed toward the side of the end portion E1 in the axis line x direction, the space portion S which has a recessed shape is provided between the inner periphery lip 24 and the outer periphery lip 25, and a cross-sectional shape in the U shape is thereby given to the U packing 21. Note that the inner periphery side is a side in a direction toward the axis line x in a direction orthogonal to the axis line x (also referred to as a radial direction). Further, the outer periphery side is a side in a direction to move apart from the axis line x in the direction orthogonal to the axis line x.

The inner periphery lip 24 extends at an angle, which is directed toward the inner periphery side relative to a side wall 22a of the base portion 22 on the inner periphery side, and causes a lip piece 24a to protrude from the side wall 22a to the inner periphery side. An end portion of the lip piece 24a on an inner diameter side has an inverted tapered shape whose diameter is enlarged toward the end portion E2 side of the U packing 21, and a sharp cross-sectional shape, which forms a vertex of a triangle, is thereby given to a portion in which the inner diameter is smallest. The sharp portion is a lip end 24b. The lip end 24b is a seal surface on the inner periphery side, which contacts an outer peripheral surface 121a of the piston 121.

The outer periphery lip 25 extends at an angle, which is directed toward the outer periphery side relative to a side wall 22b of the base portion 22 on the outer periphery side, and causes a lip piece 25a to protrude from the side wall 22b to the outer periphery side. For example, a cross-sectional shape having a curved shape is given to an outer peripheral surface of the outer periphery lip 25. A portion having the curved shape is a lip end 25b. The lip end 25b is the seal surface 5 which faces the outer periphery side and contacts the cylinder 111 for sealing the gap between the piston 121 and the cylinder 111.

The space portion S has an opening portion S4 which is demarcated by a bottom surface S1 as an inner wall of the base portion 22, an inner periphery side wall surface S2 as an inner wall of the inner periphery lip 24, and an outer periphery side wall surface S3 as an inner wall of the outer periphery lip 25 and which is open at the end portion E2 of the U packing 21. The inner periphery lip 24 and the outer periphery lip 25 are shaped to be comparatively thin, and because of those shapes, the bottom surface S1 thereby has a comparatively wide area. The inner periphery side wall surface S2 and the outer periphery side wall surface S3 of the space portion S have inclined shapes in which a separation distance between each other is enlarged as progress toward the opening portion S4. In other words, an inner surface of the inner periphery lip 24, which forms the inner periphery side wall surface S2, presents an inclined shape whose diameter is reduced as progresses toward a tip end portion, and an inner surface of the outer periphery lip 25, which forms the outer periphery side wall surface S3, presents an inclined shape whose diameter is enlarged as progresses toward a tip end portion.

The whole U packing 21 is shaped of a fluororesin material such as PTFE and has certain hardness and elasticity.

Thus, as illustrated in Figure 1, in a case where the U packing 21 is mounted on the mounting groove 122, when the lip end 24b of the inner periphery lip 24 contacts the outer peripheral surface 121a of the piston 121, a portion of the side wall 22a from a root side of the inner periphery lip 24 to the base portion 22 produces a gap G1 between this portion and the outer peripheral surface 121a of the piston 121. The inner periphery lip 24 elastically deforms and thereby raises contact pressure to the outer peripheral surface 121a of the piston 121.

When the lip end 25b (seal surface 5) of the outer periphery lip 25 contacts a bottom portion 122a of the mounting groove 122, a portion of the side wall 22b from a root side of the outer periphery lip 25 to the base portion 22 produces a gap G2 between this portion and the bottom portion 122a of the mounting groove 122. The outer periphery lip 25 elastically deforms and thereby raises contact pressure to the bottom portion 122a of the mounting groove 122.

As illustrated in Figure 3 and Figure 4, the support ring 31 is an annular member that is arranged in the space portion S, which has a recessed shape, between the inner periphery lip 24 and the outer periphery lip 25 and that contacts and supports the outer periphery side wall surface S3 as the inner wall of the outer periphery lip 25. Such a support ring 31 is generated with a rigid body such as metal so as to be capable of inhibiting diameter reduction of the outer periphery lip 25 even when contraction occurs in the fluororesin material as a material of the U packing 21 placed in the low temperature environment, for example.

However, although a rigid body is used, even when the support ring 31 using any material and in any form is provided, as long as that is a real substance, the support ring 31 cannot be realized as a theoretically perfect rigid body. The rigid body mentioned in the present embodiment means a member having rigidity equal to or higher than such rigidity that diameter reduction of the inner wall (outer periphery side wall surface S3) of the outer periphery lip 25 can be regulated, such that even in a case where the U packing 21 contracts when the sealing structure 10 is arranged in the low temperature environment, the lip end 25b (seal surface 5) of the outer periphery lip 25 is not separated from the bottom portion 122a of the mounting groove 122, in other words, contact between the lip end 25b (seal surface 5) and the bottom portion 122a of the mounting groove 122 is maintained. Note that as for forms of a shape, a material, and so forth of the support ring 31, the shape, the material, and so forth may have elasticity as long as those support the outer periphery lip 25 such that contact between the lip end 25b (seal surface 5) and the bottom portion 122a of the mounting groove 122 is maintained in the usage state.

In the present embodiment, the support ring 31 is used which has a pipe shape and in which a cross section of the support ring 31 in a plane orthogonal to an extending direction of the support ring 31 around the axis line x has a C shape. Dimensions of portions of the support ring 31 are defined as such dimensions that the portions contact the bottom surface S1 and the outer periphery side wall surface S3 of the space portion S but do not contact the inner periphery side wall surface S2 and are completely housed in the space portion S without jutting out from the opening portion S4.

Next, a description will be made about actions of the sealing structure 10 having the above-described configuration.

### (1) Basic Actions and Effects

As illustrated in Figure 1, when the sealing structure 10 is mounted on the mounting groove 122 and the two members 101 are assembled, the sealing structure 10 becomes the usage state (see Figure 1). In the sealing device 11 in the usage state, the lip end 24b of the inner periphery lip 24 of the U packing 21 contacts the outer peripheral surface 121a of the piston 121, the lip end 25b (seal surface 5) of the outer periphery lip 25 contacts the bottom portion 122a of the mounting groove 122, a portion between the cylinder 111 and the piston 121 is thereby sealed, and sealing is performed for the fluid whose pressure is boosted in the internal space I of the cylinder 111.

### (2) Problems with U seal of Reference Example

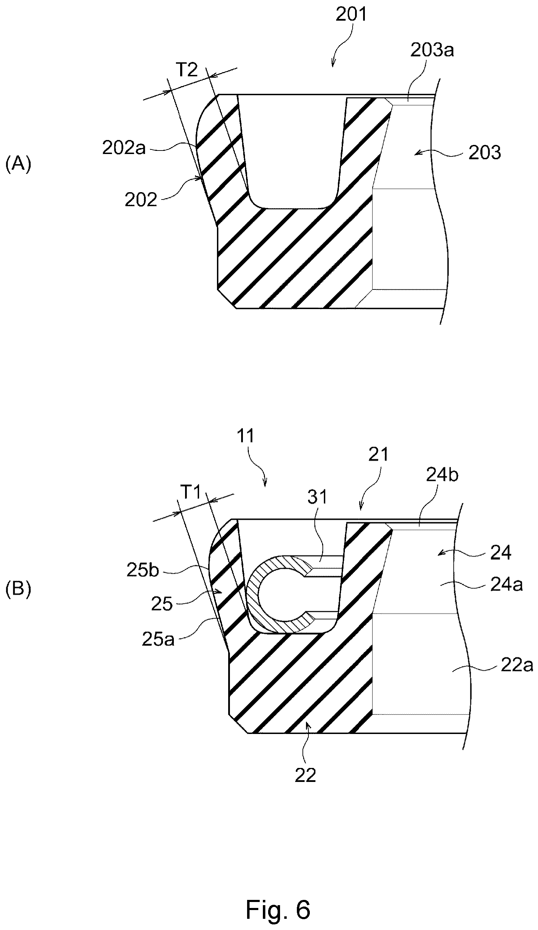

Figure 5 is a perspective view illustrating a U seal 201 of a reference example. The U seal 201 of the reference example does not have the support ring 31 but is formed only with the U packing. Thus, as illustrated in Figure 6(A), the U seal 201 is closely similar to a configuration which is formed only with the U packing 21 of the sealing structure 10 of the present embodiment and which is illustrated in Figure 6(B). However, what is different from the U packing 21 of the present embodiment is a thickness of an outer periphery lip 202 (the outer periphery lip 25 in the present embodiment).

The outer periphery lip 202 provided in the U seal 201 of the reference example has a thickness thicker than that of the outer periphery lip 25 provided in the U packing 21 of the present embodiment. Comparing thicknesses of root portions of the outer periphery lips 25 and 202, the thickness of the outer periphery lip 25 of the present embodiment is a thickness T1, but a thickness T2 of the outer periphery lip 202 of the reference example is approximately twice the thickness T1. Conversely, the thickness T1 of the outer periphery lip 25 of the present embodiment is approximately 1/2 of the thickness T2 of the outer periphery lip 202 of the reference example.

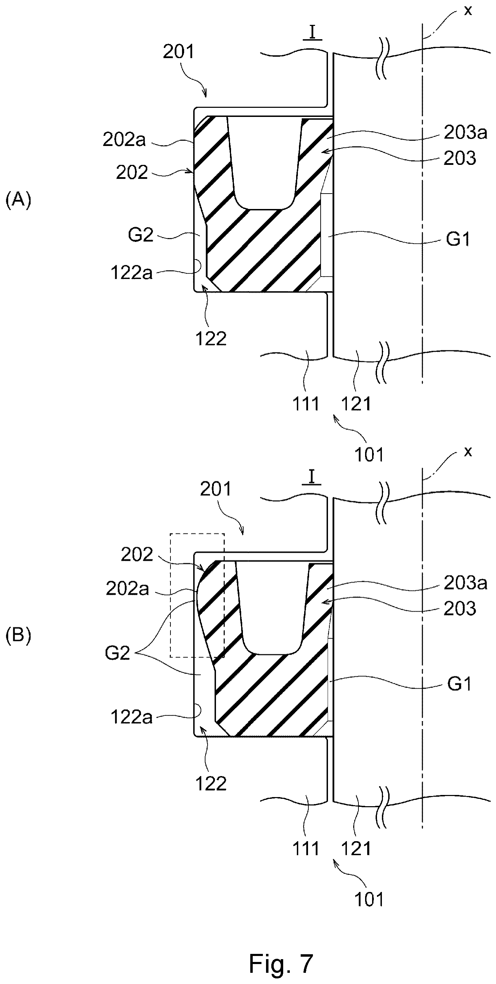

As illustrated in Figures 7(A) and 7(B), in a case where the U seal 201 of the reference example is mounted on the mounting groove 122 and used, in an ordinary temperature environment, a lip end 203a of an inner periphery lip 203 contacts the outer peripheral surface of the piston 212, a lip end 202a of the outer periphery lip 202 contacts the bottom portion 122a of the mounting groove 122, the portion between the cylinder 111 and the piston 121 is sealed, and sealing is performed for the fluid whose pressure is boosted in an internal portion of the cylinder 111 (see Figure 7(A)).

However, as illustrated in Figure 7 (B), in a case where the fluid whose pressure is boosted in the internal portion of the cylinder 111 is a fluid at a low temperature, the U seal 201 formed of the fluororesin material such as PTFE contracts. Thus, the gap G1 between the U seal 201 and the outer peripheral surface of the piston 121 becomes narrow, and the gap G2 between the mounting groove 122 and the bottom portion 122a is enlarged. Then, as a region indicated by surrounding that by broken lines in Figure 7(B), the lip end 202a (seal surface) of the outer periphery lip 202 is spaced apart from the bottom portion 122a of the mounting groove 122, and the gap G2 goes across a portion between the lip end 202a and the bottom portion 122a. As a result, sealability of the internal space I of the cylinder 111 lowers, and this leads to lowering of boosting pressure and fluid leakage.

### (3) Inhibition of Diameter Reduction

In the sealing structure 10 of the present embodiment as well, in a case where the fluid whose pressure is boosted in the internal portion of the cylinder 111 is a fluid at a low temperature, the fact that the U packing 21 shaped of the fluororesin material such as PTFE contracts is the same as the U seal 201 of the reference example. The fact that accompanying shrinkage of the U packing 21, the gap G1 between the side wall 22a on the inner periphery side and the outer peripheral surface of the piston 121 becomes narrow is the same as the U seal 201 of the reference example.

On the other hand, in the sealing device 11 of the sealing structure 10 of the present embodiment, when the outer periphery lip 25 is about to contract accompanying shrinkage of the U packing 21, the support ring 31 acts against diameter reduction behavior of the outer periphery lip 25, and the support ring 31 exerts regulation force. More specifically, even when the outer periphery side wall surface S3 as the inner wall of the outer periphery lip 25 is about to move in a diameter reduction direction, the support ring 31 regulates this movement so as to block this movement. Thus, large diameter reduction which occurs in the outer periphery lip 202 of the reference example does not occur in the outer periphery lip 25 of the present embodiment, and the bottom portion 122a of the mounting groove 122 and the lip end 25b (seal surface 5) of the outer periphery lip 25 can be maintained in a contact state. As a result, sealability of the internal space I of the cylinder 111 can be maintained, and it becomes possible to avoid lowering of the boosting pressure and fluid leakage.

Further, because the thickness T1 of the outer periphery lip 25 of the present embodiment is as thin as approximately 1/2 of the thickness T2 of the outer periphery lip 202 of the reference example, force which is produced in contraction of the outer periphery lip 25 is reduced. Accordingly, application of such large force that causes deformation of the support ring 31 can be prevented.

As described above, in the sealing structure 10 according to the present embodiment, one sealing device 11 can maintain sealing performance for the fluid even in the low temperature environment or can inhibit lowering of sealing performance. Thus, in the sealing structure 10 according to the present embodiment, even in the low temperature environment, one sealing device 11 can exhibit desired sealing performance. The desired sealing performance is sealing performance that is arbitrarily set by a user or the like in accordance with an application target or an application situation of the sealing structure 10, for example. Specifically, for example, by setting a leakage amount of a sealing target with respect to a predetermined using time period in predetermined using conditions such as predetermined temperature and ambient pressure, the desired sealing performance is set.

As described above, without sealing by aligning a plurality of sealing devices in series and providing closing structures in a multistage manner as in related art, by a simple structure which is one sealing device, the sealing structure 10 can maintain sealing performance or inhibit lowering of sealing performance even in the low temperature environment. Thus, the sealing structure 10 according to the embodiment of the present invention can obtain desired sealing performance for the fluid with the simple structure even in the low temperature environment.

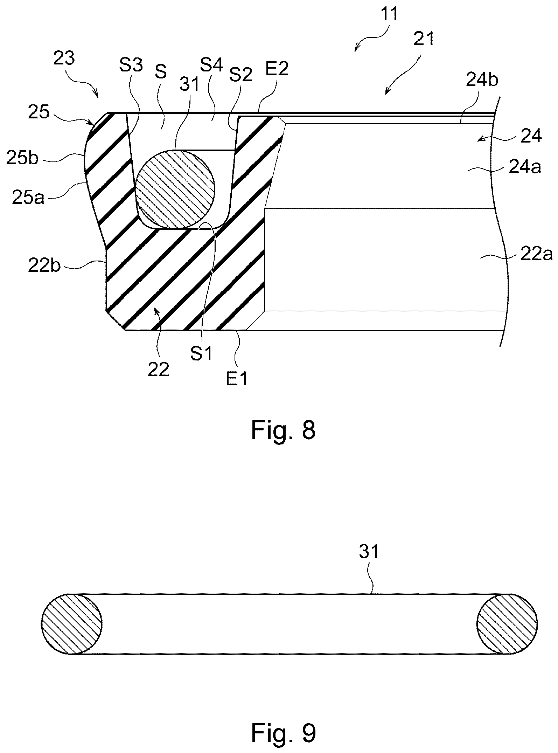

Next, a modification example of the above-described sealing structure 10 will be described based on Figure 8 and Figure 9. Note that Figures 8 and 9 are cross-sectional views illustrating the modification example of the sealing structure 10. The same portions as those of the above embodiment described based on Figure 1 through Figure 7 will be denoted by the same reference characters, and descriptions thereof will not be made.

The present modification example is one example where an O-ring member formed of metal as the rigid body is used as the support ring 31. The fact that the O-ring member is the rigid body, the meaning of the rigid body, a dimension relationship with the U packing 21, a mounting position on the U packing 21, and so forth are similar to the above embodiment.

In a case where the O-ring member formed of metal as the rigid body is used as the support ring 31, the same actions and effects as those of the above embodiment can also be obtained.

In practice, various modifications and changes are allowed.

For example, as for the support ring 31, as long as the support ring 31 is an annular rigid body which is arranged in the space portion S having the recessed shape between the inner periphery lip 24 and the outer periphery lip 25 and which supports the inner wall of the outer periphery lip 25, the support ring 31 is not limited to a pipe-shaped member whose cross section has a C shape and which is formed of metal (see Figure 4) or an O-ring member formed of metal (see Figure 9), and it is possible to use a member in any other form.

Dimensions of the support ring 31 do not necessarily have to be defined as such dimensions that the support ring 31 contacts the bottom surface S1 of the space portion S but does not contact the inner periphery side wall surface S2 and is completely housed in the space portion S without jutting out from the opening portion S4, as in the above embodiment. In practice, for example, the support ring 31 may be used which contacts three surfaces of the bottom surface S1, the inner periphery side wall surface S2, and the outer periphery side wall surface S3, or the support ring 31 may be used which contacts two surfaces of the inner periphery side wall surface S2 and the outer periphery side wall surface S3 but does not contact the bottom surface S1. Alternatively, it is possible to use the support ring 31 having such dimensions that the support ring 31 somewhat juts out from the opening portion S4 and is not completely housed in the space portion S.

In the above-described embodiment, details of the U packing 21 are mentioned, but the mentioned details of the U packing 21 do not limit forms of a practicable sealing device 11 and the sealing structure 10 using that.

Next, a sealing structure 12 as the sealing structure 1 according to a second embodiment of the present invention will be described.

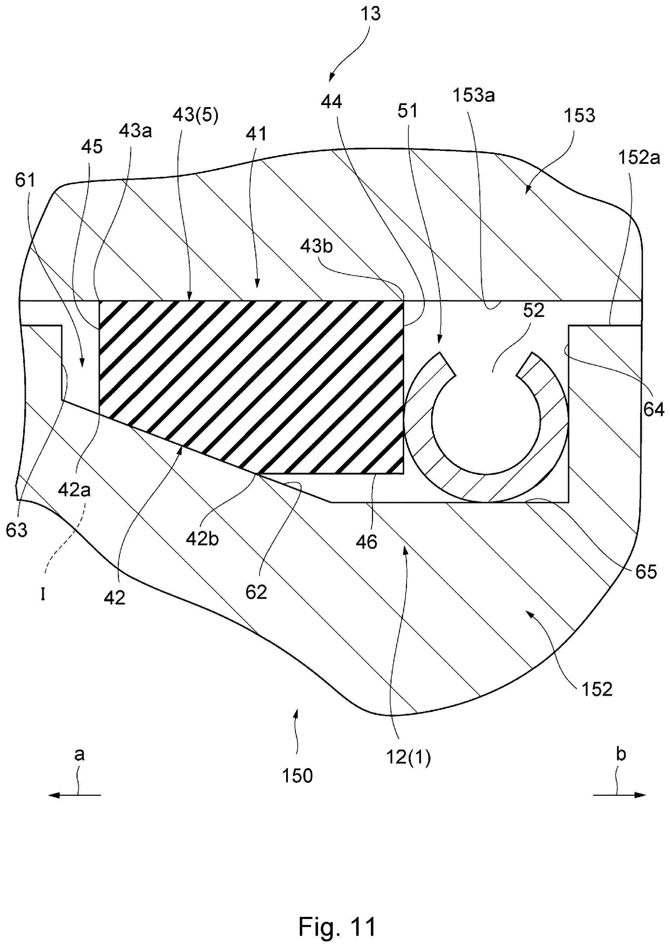

Figure 10 is a cross-sectional view illustrating an outline configuration of the sealing structure 12 according to the second embodiment of the present invention in a usage state in an application to a pump 150, and Figure 11 is a partially enlarged cross-sectional view illustrating the sealing structure 12 illustrated in Figure 10. Note that Figure 10 illustrates a cross section in a plane including the axis line x. As illustrated in Figure 10, the sealing structure 12 according to the second embodiment includes a sealing device 13 as one sealing device 2, and the sealing device 13 includes a seal ring 41 as the seal ring 3 and a pressing ring 51 as the action member 4. Further, the sealing structure 12 has an action surface 62 which acts on the seal ring 41. The action surface 62 pushes the seal ring 41, which is pushed by the pressing ring 51, in a direction in which contact of the seal surface 5 is formed. The pressing ring 51 pushes the seal ring 41 to one side in the axis line x direction (an arrow a direction in Figures 10 and 11) so as to maintain contact of the seal surface 5. In the sealing structure 12, the pressing ring 51 pushes the seal ring 41 to one side in the axis line x direction, and contact of the seal surface 5 is thereby maintained in the low temperature environment. Hereinafter, a configuration of the sealing structure 12 will specifically be described.

As described above, in the sealing structure 12, the pressing ring 51 pushes the seal ring 41 to one side in the axis line x direction such that the seal ring 41 is pushed by the action surface 62 in a direction in which contact of the seal surface 5 is formed, and contact of the seal surface 5 of the seal ring 41 is thereby maintained. Specifically, as illustrated in Figures 10 and 11, the sealing structure 12 includes a housing groove 61 as a groove which is annular around the axis line x and which houses the sealing device 13. The housing groove 61 is open to the outer periphery side, and the housing groove 61 has the action surface 62 as a surface which is annular around the axis line x.

Specifically, for example, as illustrated in Figures 10 and 11, the housing groove 61 is formed in an outer peripheral surface 152a of a piston 152 of the pump 150 as an application target of the sealing structure 12. The housing groove 61 is an annular groove which is recessed from the outer peripheral surface 152a of the piston 152 to the inner periphery side. The housing groove 61 has wall surfaces 63 and 64 as annular surfaces opposed to the axis line x direction, and the action surface 62 and a bottom surface 65 extend between the wall surface 63 and the wall surface 64. The bottom surface 65 is a tubular surface which extends along the axis line x and is positioned on the most inner periphery side in the housing groove 61. An action surface 61 extends from an end of the wall surface 63 on the inner periphery side to the wall surface 64 side, and the bottom surface 65 extends from an end of the action surface 62 on the wall surface 64 side to an end of the wall surface 64 on the inner periphery side.

As illustrated in Figure 10, the action surface 62 is a tapered surface whose diameter is enlarged from the wall surface 64 side toward the wall surface 63 side (to one side in the axis line x direction (arrow a direction)). The action surface 62 is a surface whose diameter is smoothly enlarged, for example. The action surface 62 may be a tapered surface whose diameter is continuously enlarged from the wall surface 64 side toward the wall surface 63 side or may be a tapered surface whose diameter is intermittently enlarged from the wall surface 64 side toward the wall surface 63 side. The surface whose diameter is intermittently enlarged is a surface in which tubular surfaces whose diameters are enlarged and tubular surfaces whose diameters are constant are combined, for example. The action surface 62 is a conical surface or a generally conical surface which has the axis line x as a central axis or a generally central axis, for example.

As illustrated in Figure 10, similarly to the above-described pump 100, the pump 150 has two members 151 of the piston 152 and a cylinder 153. Both of the piston 152 and the cylinder 153 are formed of metal. Between the two members 151, an annular gap is formed. The cylinder 153 is an annular member, which retains the piston 152 such that the piston 152 is capable of reciprocating, and forms an outer periphery member of the two members 151. An inner peripheral surface 153a of the cylinder 153 is a tubular surface and demarcates the internal space I into which the piston 152 is inserted. The piston 152 is housed in the internal space I of the cylinder 153 to be capable of reciprocating and is driven by a driving mechanism, which is not illustrated, to reciprocate in the internal space I of the cylinder 153. The sealing structure 12 is applied to the pump 150 and becomes the usage state. The sealing structure 12 seals the gap between the two members 151.

Similarly to the above-described pump 100, the pump 150 is a booster pump, boosts pressure of a liquid, and pressure-feeds the liquid to an outside. The liquid to be pressure-fed by the pump 150 is a liquid at a low temperature such as low temperature liquefied gas, for example. In a case where the liquid to be pressure-fed by the pump 150 is a liquid at a low temperature, the sealing structure 12 is placed in the low temperature environment. The low temperature environment is an environment in which the ambient temperature is lower than the atmospheric temperature, for example. Specifically, for example, the low temperature environment is an environment in which the ambient temperature is -253°C or an environment in which the ambient temperature is lower than -253°C.

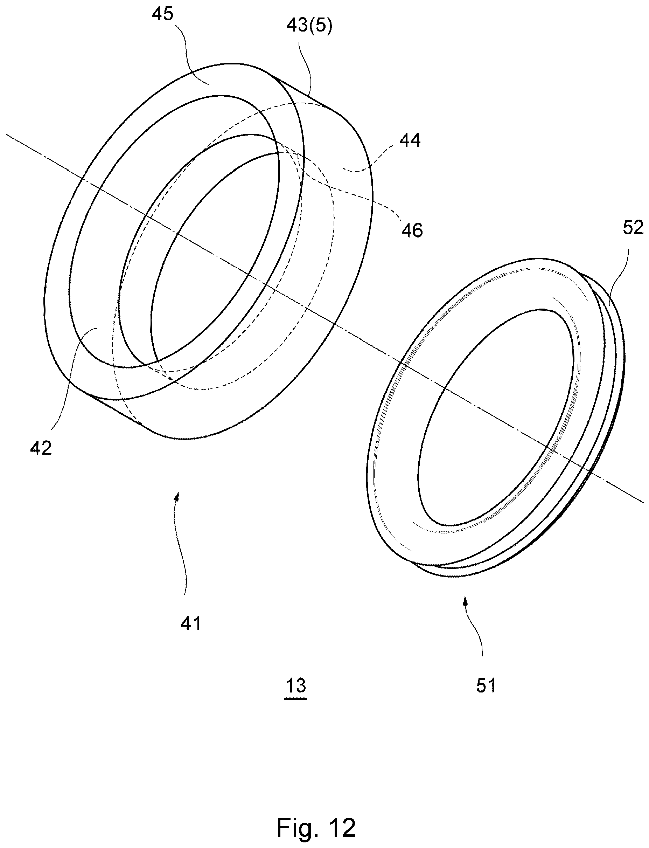

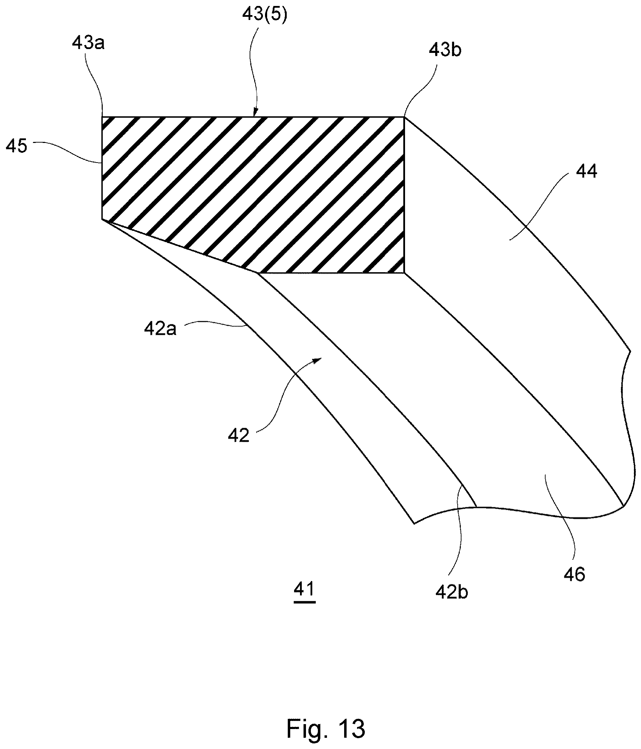

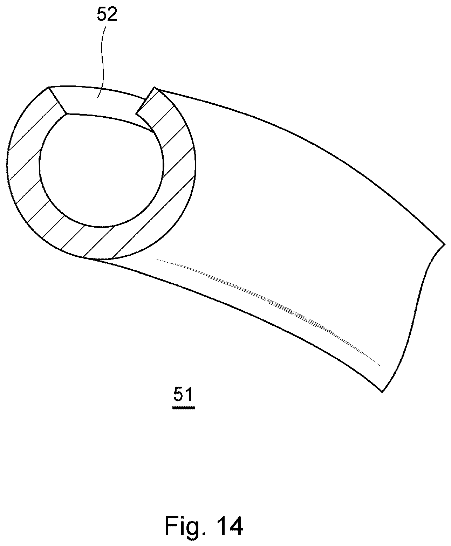

Figure 12 is an exploded perspective view of the sealing device 13 of the sealing structure 12. Further, Figure 13 is a cross-sectional perspective view illustrating a part of the seal ring 41 in the sealing device 13, and Figure 14 is a cross-sectional perspective view illustrating a part of the pressing ring 51 of the sealing device 13. Note that Figures 13 and 14 illustrate cross sections in a plane including the axis line x.

As described above, the seal ring 41 is pushed to one side in the axis line x direction in the housing groove 61 and is pushed by an action of the action surface 62 in a direction in which contact of the seal surface 5 is formed, in other words, pushed to the inner peripheral surface 153a of the cylinder 153. In order to receive the action of the action surface 62 in such a manner, the seal ring 41 has an action receiving surface 42 as an annular surface which contacts the action surface 62. The action receiving surface 42 has a shape corresponding to the action surface 62. As illustrated in Figures 10 to 13, for example, the action surface 42 is a tapered surface whose diameter is enlarged toward one side in the axis line x direction (arrow a direction). The action receiving surface 42, for example, as the whole or generally the whole, contacts the action surface 62 and has the same or generally the same shape as the action surface 62. The action receiving surface 42 is a surface whose diameter is smoothly enlarged, for example. The action receiving surface 42 may be a tapered surface whose diameter is continuously enlarged toward one side in the axis line x direction or may be a tapered surface whose diameter is intermittently enlarged toward one side in the axis line x direction. As described above, the surface whose diameter is intermittently enlarged is a surface in which tubular surfaces whose diameters are enlarged and tubular surfaces whose diameters are constant are combined. For example, the action receiving surface 42 is a conical surface or a generally conical surface which has the axis line x as the central axis or a generally central axis.

As illustrated in Figures 10 to 13, the seal ring 41 has an outer peripheral surface 43 as a surface which is annular around the axis line x and which faces the outer periphery side and faces away from the action receiving surface 42. As illustrated in Figures 10 and 11, the outer peripheral surface 43 contacts the inner peripheral surface 153a of the cylinder 153 throughout a whole circumference, and the outer peripheral surface 43 serves as the seal surface 5. For example, the outer peripheral surface 43 is a cylindrical surface or a generally cylindrical surface which has the axis line x as the central axis or a generally central axis. A width of the outer peripheral surface 43 in the axis line x direction is larger than a width of the action receiving surface 42 in the axis line x direction. Further, as illustrated in Figure 11, a position of an end (end 43a) of the outer peripheral surface 43 on one side in the axis line x direction is the same or generally the same as a position of an end (end 42a) of the action receiving surface 42 on one side in the axis line x direction. Further, as illustrated in Figure 11, a position of an end (end 43b) of the outer peripheral surface 43 on another side in the axis line x direction is different from a position of an end (end 42b) of the action receiving surface 42 on the other side in the axis line x direction and is positioned on the other side (arrow b direction) relative to the end 42b in the axis line x direction. Note that the width of the outer peripheral surface 43 (seal surface 5) in the axis line x direction may be the same as the width of the action receiving surface 42 in the axis line x direction or may be smaller than the width of the action receiving surface 42 in the axis line x direction. Further, the position of the end 43a of the outer peripheral surface 43 in the axis line x direction may be different from the position of the end 42a of the action receiving surface 42 in the axis line x direction. Further, the position of the end 43b of the outer peripheral surface 43 in the axis line x direction may be the same as the position of the end 42b of the action receiving surface 42 in the axis line x direction or may be positioned on the one side relative to the end 42b in the axis line x direction.

Further, as described above, in the housing groove 61, the seal ring 41 is pushed to one side in the axis line x direction by the pressing ring 51. In order to receive an action of the pressing ring 51 in such a manner, the seal ring 41 has an action receiving surface 44 as an annular surface that the pressing ring 51 contacts in the housing groove 61. As illustrated in Figures 10 to 13, the action receiving surface 44 of the seal ring 41 is an annular surface which is provided on the other side in the axis line x direction relative to the outer peripheral surface 43 (seal surface 5) and the action receiving surface 42 and which faces the other side (arrow b direction) in the axis line x direction. As illustrated in Figures 10 to 13, for example, the action receiving surface 44 is a surface which is parallel or generally parallel with a plane orthogonal to the axis line x. Note that the action receiving surface 44 may be inclined with respect to the plane orthogonal to the axis line x. Further, the action receiving surface 44 may be a surface, which is not a flat surface, such a curved surface.

Further, as illustrated in Figures 10 to 13, the seal ring 41 has a side surface 45 as an annular surface, which is provided facing away from the action receiving surface 44 and faces one side of the axis line x direction, and a bottom surface 46 as a tubular surface, which extends between the action receiving surface 42 and the action receiving surface 44 and faces the inner periphery side. Note that the seal ring 41 does not have to have the bottom surface 46. In this case, the action receiving surface 42 is connected to the action receiving surface 44.

A width of the seal ring 41 in the radial direction is set to such a size that in the usage state, the outer peripheral surface 43 (seal surface 5) contacts the inner peripheral surface 153a of the cylinder 153 and the action receiving surface 42 contacts the action surface 62 of the housing groove 61 of the piston 152. On the other hand, the width of the seal ring 41 in the radial direction is set to such a size that in the usage state, the bottom surface 46 does not contact the bottom surface 65 of the housing groove 61 of the piston 152. Further, a width of the seal ring 41 in the axis line x direction is set to such a size that in the usage state, the side surface 45 does not contact the side wall 63 of the housing groove 61 and the action receiving surface 44 does not contact the side wall 64 of the housing groove 61. Note that a state of the usage state includes the ambient temperature at which the sealing structure 12 is used. In other words, in a case where the sealing structure 12 is used in the low temperature environment, the usage state is a state in the low temperature environment.

The seal ring 41 is formed of a resin, for example. Examples of a resin material for forming the seal ring 41 may include resin materials such as polyether ether ketone (PEEK), polyphenylene sulfide (PPS), polytetrafluoroethylene (PTFE), polyimide (PI), and polyamide-imide (PAI). Note that the resin material of the seal ring 41 may include a filler material for improving sliding characteristics or strength, for example. As described above, the seal ring 41 is used for the pump which pressure-feeds a liquid. In a case where the sealing structure 12 is used in the low temperature environment, as a material of the seal ring 41, a material with a small linear expansion coefficient is preferable. For example, the material of the seal ring 41 is a material whose linear expansion coefficient is lower than 15 × 10⁻⁵/°C. Further, in a case where the sealing structure 12 is used in the low temperature environment, as the material of the seal ring 41, PEEK with a small linear expansion coefficient is preferable.

As described above, in the housing groove 61, the pressing ring 51 pushes the seal ring 41 to one side in the axis line x direction. In order that the pressing ring 51 acts in such a manner, the pressing ring 51 produces elastic force in a direction along the axis line x in the housing groove 61 and is an elastic member which produces elastic force in the direction along the axis line x, for example. The pressing ring 51 is compressed in the axis line x direction between the side wall 64 of the housing groove 61 and the action receiving surface 44 of the seal ring 41, for example. As illustrated in Figures 10, 11, and 14, for example, as for the pressing ring 51, a shape of a cross section in a plane including the axis line x is a circular arc shape, a generally circular arc shape, or a C shape, and an annular gap 52 is formed which is open to the outer periphery side in the radial direction. Further, in the usage state, a width of the pressing ring 51 in the axis line x direction is larger than a width in the axis line x direction between the side wall 64 of the housing groove 61 and the action receiving surface 44 of the seal ring 41. Further, the pressing ring 51 contacts the bottom surface 65 of the housing groove 61, for example.

The pressing ring 51 is formed of metal, for example, and the linear expansion coefficient of the pressing ring 51 is smaller than the linear expansion coefficient of the seal ring 41. Note that the shape of the pressing ring 51 is not limited to the above-described shape and may be another shape as long as the shape allows the pressing ring 51 to push the seal ring 41 to one side in the axis line x direction. For example, a cross-sectional shape of the pressing ring 51 may be an annular shape, a circular shape, or a generally circular shape. Further, it is sufficient that the pressing ring 51 is a member which can push the seal ring 41 to one side in the axis line x direction in the usage state, and the member may be a member such as a spring member, a coil member, or a metal O ring.

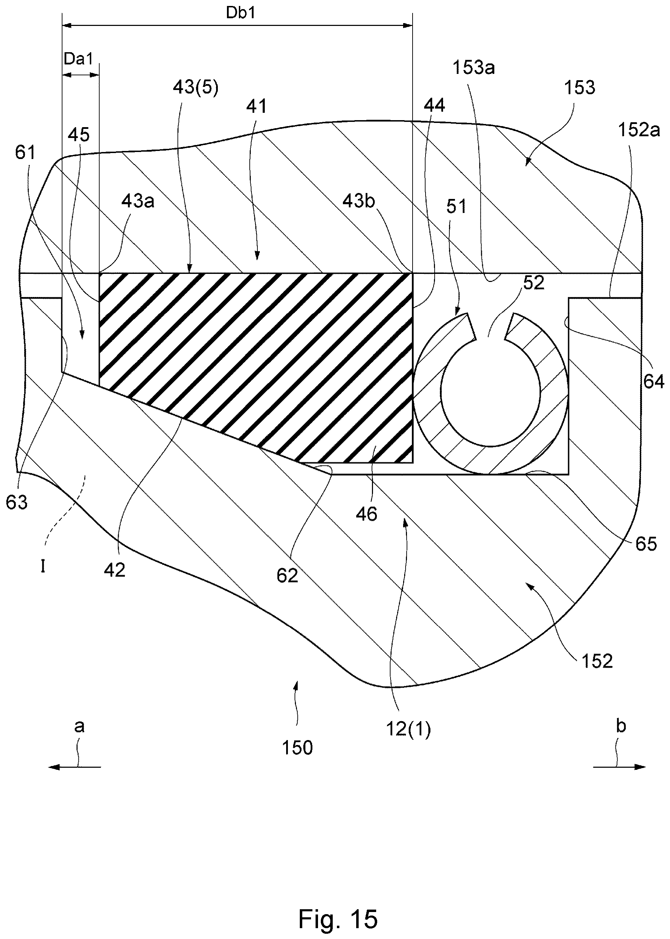

Next, a description will be made about actions of the sealing structure 12 having the above-described configuration. Figure 15 is a cross-sectional view illustrating a cross section of the sealing structure 12 in a state where the pump 150 is assembled. Because assembly of the pump 150 is usually performed at the atmospheric temperature, the sealing structure 12 in the state where the pump 150 is assembled is placed in a state where the ambient temperature is the atmospheric temperature. In other words, Figure 15 illustrates the sealing structure 12 in the usage state where the ambient temperature is the atmospheric temperature.

As illustrated in Figure 15, in the usage state where the ambient temperature is the atmospheric temperature, the outer peripheral surface 43 (seal surface 5) of the seal ring 41 contacts the inner peripheral surface 153a of the cylinder 153, and the action receiving surface 42 contacts the action surface 62 of the housing groove 61 of the piston 152. Further, the pressing ring 51 is interposed between the action receiving surface 44 of the seal ring 41 and the side wall 64 of the housing groove 61 and is compressed in the axis line x direction. In the usage state where the ambient temperature is the atmospheric temperature, the pressing ring 51 acts on the action receiving surface 44, and the seal ring 41 is pushed to one side in the axis line x direction by the pressing ring 51. By this action of the pressing ring 51, the action receiving surface 42 of the seal ring 41 is pressed onto the action surface 62 of the housing groove 61. Thus, the action receiving surface 42 of the seal ring 41 receives reaction force from the action surface 62 of the housing groove 61 and is pressed onto the inner peripheral surface 153a of the cylinder 153 by a component, of the reaction force, which is directed in the radial direction. In such a manner, the seal ring 41 carries out sealing of the gap between the piston 152 and the cylinder 153. In other words, the seal ring 41 carries out sealing for the liquid whose pressure is boosted in the internal space I of the cylinder 153.

As illustrated in Figure 15, in the usage state where the ambient temperature is the atmospheric temperature, a distance from the side wall 63 of the housing groove 61 to the side surface 45 of the seal ring 41 in the axis line x direction is a distance Da1. Further, a distance from the side wall 63 of the housing groove 61 to the action receiving surface 44 of the seal ring 41 in the axis line x direction is a distance Db1.

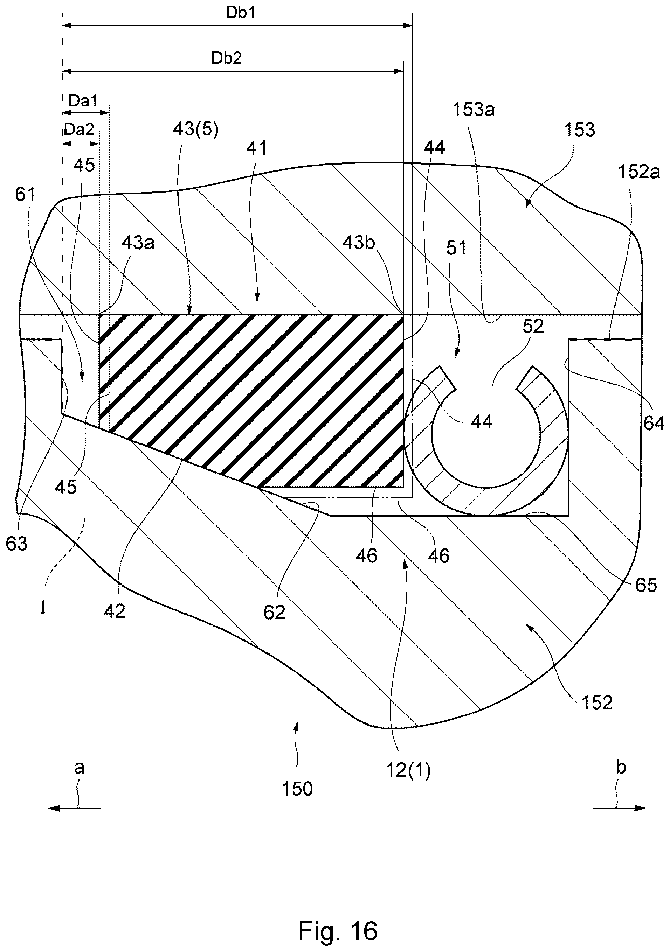

On the other hand, as illustrated in Figure 16, in a case where the sealing structure 12 is used in the low temperature environment, the seal ring 41 contracts, and the width of the seal ring 41 in the radial direction becomes smaller than the width of the seal ring 41 in the radial direction in the state where the pump 150 is assembled, which is illustrated in Figure 15. In such a manner, the seal ring 41 contracts in a direction in which the outer peripheral surface 43 (seal surface 5) moves apart from the inner peripheral surface 153a of the cylinder 153 and in a direction in which the action receiving surface 42 moves apart from the action surface 62 of the housing groove 61. Meanwhile, the pressing ring 51 is compressed in the axis line x direction, and the pressing ring 51 continues to push the contracting seal ring 41 to one side in the axis line x direction. Thus, even when the seal ring 41 contracts, contact between the action receiving surface 42 of the seal ring 41 and the action surface 62 of the housing groove 61 is maintained, the action of the action surface 62 is maintained, and contact between the outer peripheral surface 43 of the seal ring 41 and the inner peripheral surface 153a of the cylinder 153 is maintained. Note that Figure 16 is a view for comparing the seal ring 41 in the usage state where the ambient temperature is the atmospheric temperature with the seal ring 41 in the usage state in the low temperature environment.

As illustrated in Figure 16, in the usage state in the low temperature environment, the seal ring 41 contracts, and the distance from the side wall 63 of the housing groove 61 to the side surface 45 of the seal ring 41 in the axis line x direction is a distance Da2. Further, the distance from the side wall 63 of the housing groove 61 to the action receiving surface 44 of the seal ring 41 in the axis line x direction is a distance Db2. In such a manner, the distance Da2 from the side wall 63 to the side surface 45 in the axis line x direction in the usage state in the low temperature environment is shorter than the distance Da1 from the side wall 63 to the side surface 45 in the axis line x direction in the usage state where the ambient temperature is the atmospheric temperature (Da2 < Da1). Further, the distance Db2 from the side wall 63 to the action receiving surface 44 in the axis line x direction in the usage state in the low temperature environment is shorter than the distance Db1 from the side wall 63 to the action receiving surface 44 in the axis line x direction in the usage state where the ambient temperature is the atmospheric temperature (Db2 < Db1). Further, in the usage state in the low temperature environment, the pressing ring 51 expands in the axis line x direction, but the pressing ring 51 is compressed in the axis line x direction between the action receiving surface 44 and the side wall 64, and the pressing ring 51 pushes the contracting seal ring 41 to one side in the axis line x direction.

In such a manner, in the low temperature environment, even when the seal ring 41 contracts, the pressing ring 51 continues to act on the action receiving surface 44 of the seal ring 41. Thus, the seal ring 41 continues to be pushed to one side in the axis line x direction by the pressing ring 51. Accordingly, even in the usage state in the low temperature environment, the seal ring 41 acts similarly to the usage state where the ambient temperature is the atmospheric temperature, the action receiving surface 42 of the seal ring 41 is pressed onto the action surface 62 of the housing groove 61, and by this reaction force, the outer peripheral surface 43 (seal surface 5) of the seal ring 41 is pressed onto the inner peripheral surface 153a of the cylinder 153. In such a manner, even in the usage state in the low temperature environment, the seal ring 41 carries out sealing of the gap between the piston 152 and the cylinder 153, in other words, carries out sealing for the liquid whose pressure is boosted in the internal space I of the cylinder 153 even in the usage state in the low temperature environment.

Even in the usage state in an environment in which the ambient temperature is -253°C or in the low temperature environment as an environment in which the ambient temperature is lower than -253°C, as illustrated in Figure 16, the action receiving surface 44 of the seal ring 41 is pushed by the pressing ring 51, the action receiving surface 42 of the seal ring 41 is pressed onto the action surface 62 of the housing groove 61, and by this reaction force, the outer peripheral surface 43 (seal surface 5) of the seal ring 41 is pressed onto the inner peripheral surface 153a of the cylinder 153. In such a manner, even in the environment in which the ambient temperature is -253°C or the low temperature environment as the environment in which the ambient temperature is lower than -253°C, the seal ring 41 carries out sealing of the gap between the piston 152 and the cylinder 153 and carries out sealing for the liquid whose pressure is boosted in the internal space I of the cylinder 153.

As described above, a form of the pressing ring 51 is set such that even in the usage state in the low temperature environment, the pressing ring 51 acts on the action receiving surface 44 of the seal ring 41. For example, a compression width of the pressing ring 51 in the axis line x direction in the usage state where the ambient temperature is the atmospheric temperature is set such that even in the usage state in the low temperature environment, the pressing ring 51 acts on the action receiving surface 44 of the seal ring 41. Further, for example, characteristics such as an elastic coefficient of the pressing ring 51 are set such that even in the usage state in the low temperature environment, the pressing ring 51 acts on the action receiving surface 44 of the seal ring 41.

As described above, in the sealing structure 12 according to the present embodiment, one sealing device 13 can maintain sealing performance for the fluid even in the low temperature environment or can inhibit lowering of sealing performance. Thus, in the sealing structure 12 according to the present embodiment, even in the low temperature environment, one sealing device 13 can exhibit desired sealing performance. The desired sealing performance is sealing performance that is arbitrarily set by a user or the like in accordance with an application target or an application situation of the sealing structure 12, for example. Specifically, for example, by setting the leakage amount of the sealing target with respect to a predetermined using time period in predetermined using conditions such as predetermined temperature and ambient pressure, the desired sealing performance is set.

As described above, without sealing by aligning a plurality of sealing devices in series and providing closing structures in a multistage manner as in related art, by a simple structure which is one sealing device, the sealing structure 12 can maintain sealing performance or inhibit lowering of sealing performance even in the low temperature environment. Thus, the sealing structure 12 according to the embodiment of the present invention can obtain desired sealing performance for the fluid with the simple structure even in the low temperature environment.

In the foregoing, the present invention is described based on the above embodiments, but the technical scope of the present invention is not limited to the scope described in the above embodiments. It is clear for a person skilled in the art that various changes or improvements can be applied to the above embodiments. It is clear from descriptions of the claims that forms in which such changes or improvements are applied can be included in the technical scope of the present invention.

The embodiments described in the foregoing are for facilitating understanding of the present invention but are not for limited interpretation of the present invention. Further, the above-described embodiments do not limit use targets for which the present invention is used, and the present invention can include all articles as the use targets thereof. Each configuration element included in the above embodiments and its arrangement, material, condition, shape, size, and so forth are not limited to those raised as examples and can appropriately be changed. For example, the present invention includes differences that occur in practice such as tolerance in manufacture. Further, within the scope in which no technical contradiction occurs, the configuration elements mentioned in the different embodiments can partially be substituted or combined. Further, configurations can appropriately selectively be combined such that at least a part of the above-described objects and effects are achieved.

For example, the seal ring 3 (U packing 21 or seal ring 41) is not limited to an endless annular member and may be provided with a cut portion that has a pair of end portions which contact each other in a liquid tight manner. The cut portion forms abutment joints, for example, and examples of the abutment joint may include an abutment joint having a special step cut shape, an abutment joint having a step cut shape, an abutment joint having a straight cut shape, and an abutment joint having a bias cut, which have been known. Further, the action member 4 (support ring 31 or pressing ring 51) is not limited to an endless annular member and may be provided with a cut portion which has a pair of end portions. Further, the action member 4 (support ring 31 or pressing ring 51) may extend in an intermittently annular shape.

### Reference Signs List

1, 10, 12 sealing structure
2, 11, 13 sealing device
3 seal ring
4 action member
5 seal surface
21 U packing
22 base portion
22a side wall (inner periphery side)
22b side wall (outer periphery side)
23 lip portion
24 inner periphery lip
24a lip piece
24b lip end
25 outer periphery lip
25a lip piece
25b lip end
31 support ring
41 seal ring
42 action receiving surface
42a, 42b end
43 outer peripheral surface
43a, 43b end
44 action receiving surface
45 side surface
46 bottom surface
51 pressing ring
52 gap
61 housing groove
62 action surface
63, 64 wall surface
65 bottom surface
100, 150 pump
101, 151 two members
111, 153 cylinder (outer periphery member)
111a, 153a inner peripheral surface
121, 152 piston (inner periphery member)
121a, 151a outer peripheral surface
122 mounting groove
122a bottom portion
201 U seal
202 outer periphery lip
202a lip end
203 inner periphery lip
203a lip end
Da1, Da2, Db1, Db2 distance
E1 end portion (base portion side)
E2 end portion (lip side)
G1 gap (inner periphery side)
G2 gap (outer periphery side)
I internal space
S space portion
S1 bottom surface
S2 inner periphery side wall surface
S3 outer periphery side wall surface (inner wall of outer periphery lip)
S4 opening portion
T1 thickness of outer periphery lip (present embodiment)
T2 thickness of outer periphery lip (reference example)

## Claims

1. A sealing structure for sealing an annular gap, the sealing structure comprising:
one sealing device, wherein
the one sealing device exhibits desired sealing performance for a fluid even in a low temperature environment,
the one sealing device has one seal ring which is annular around an axis line and one action member as a member which is annular around the axis line, and
the action member is a member which acts on the seal ring and acts such that the seal ring exhibits the desired sealing performance in the low temperature environment.

2. The sealing structure according to claim 1, wherein
the seal ring has a seal surface which forms contact for sealing the gap and faces an outer periphery side, and
the action member acts so as to maintain contact of the seal surface in the low temperature environment.

3. The sealing structure according to claim 2, wherein
the action member acts on the seal ring, which contracts in the low temperature environment, so as to maintain contact of the seal surface.

4. The sealing structure according to claim 2 or 3, wherein
the action member supports the seal ring so as to maintain contact of the seal surface.

5. The sealing structure according to claim 2 or 3, comprising:
an action surface that acts on the seal ring, wherein
the action surface pushes the seal ring, which is pushed by the action member, in a direction in which contact of the seal surface is formed, and
the action member pushes the seal ring to one side in the axis line direction so as to maintain contact of the seal surface.

6. The sealing structure according to claim 5, comprising:
a groove that is annular around the axis line and houses the sealing device, wherein
the groove is open to the outer periphery side and has the action surface, and
the action surface is a surface which is annular around the axis line.

7. The sealing structure according to claim 5, wherein
the action surface of the groove is a surface whose diameter is enlarged toward one side in the axis line direction and which faces the outer periphery side.

8. The sealing structure according to claim 5, wherein
the seal ring has an action receiving surface as an annular surface which contacts the action surface of the groove.

9. The sealing structure according to claim 5, wherein
the action member is an elastic member which produces elastic force in a direction along the axis line.

10. The sealing structure according to claim 9, wherein
the action member is compressed in a direction along the axis line between the groove and the seal ring.

11. The sealing structure according to claim 4, wherein
the seal ring has a base portion, which is annular around the axis line, and an inner periphery lip and an outer periphery lip, which are annular and branch from the base portion toward one side in the axis line direction,
the outer periphery lip is provided on the outer periphery side relative to the inner periphery lip,
the inner periphery lip and the outer periphery lip form a space portion which is annular and is recessed toward another side in the axis line direction,
the outer periphery lip has the seal surface on the outer periphery side, and
the action member is housed in the space portion and contacts, from an inner periphery side, the outer periphery lip which forms the seal surface.

12. The sealing structure according to claim 11, wherein
in the space portion, a gap is formed between the action member and the inner periphery lip.

13. The sealing structure according to claim 8, wherein
in the seal ring, the seal surface and the action receiving surface face away with each other,
on another side in the axis line direction relative to the seal surface and the action receiving surface, the seal ring has another action receiving surface as an annular surface which faces the other side in the axis line direction, and
the action member contacts the other action receiving surface.

14. The sealing structure according to claim 13, wherein
a cross-sectional shape of the action member, which is orthogonal to an extending direction around the axis line, is an annular shape or an arc shape.

15. The sealing structure according to claim 1, wherein
a linear expansion coefficient of the action member is smaller than a linear expansion coefficient of the seal ring.

16. The sealing structure according to claim 15, wherein
the action member is formed of metal.

17. The sealing structure according to claim 15, wherein
the seal ring is formed of a resin.
